# EUROPÄISCHE PATENTSCHRIFT

(11) **EP 3 786 118 B1**
(45) Veröffentlichungstag und Bekanntmachung des Hinweises auf die Patenterteilung: **22.05.2024**
(21) Anmeldenummer: 20193273.8
(22) Anmeldetag: 28.08.2020
(51) Int. Cl.: C02F 1/68, C02F 1/76

(54) **KONFEKTIONIERTE ANWENDUNGSFORM FÜR DEN EINSATZ VON DESINFEKTIONSWIRKSTOFFEN BEI DER WASSERDESINFEKTION UND DESINFEKTIONSVERFAHREN UNTER DEREN VERWENDUNG**
PREFABRICATED APPLICATION FOR USE OF DISINFECTANTS IN THE DISINFECTION OF WATER AND DISINFECTION METHOD USING THE SAME
MODE D'APPLICATION CONFECTIONNÉ POUR L'UTILISATION DE PRINCIPES ACTIFS DÉSINFECTANTS DANS LA DÉSINFECTION DE L'EAU ET PROCÉDÉ DE DÉSINFECTION UTILISANT UN TEL MODE D'APPLICATION

(30) Priorität: 29.08.2019 DE 102019213007
(43) Veröffentlichungstag der Anmeldung: 03.03.2021
(73) Patentinhaber: Carela GmbH, 79618 Rheinfelden (DE)
(72) Erfinder: REISGYS, Michael Dr., 4132 Muttenz (CH); KRUMREY, Bernd, 79591 Eimeldingen (DE)
(74) Vertreter: Friese Goeden Patentanwälte PartGmbB

(56) Entgegenhaltungen:
- WO-A2-2007/029183
- US-A1- 2014 170 036

## Beschreibung

Die Erfindung betrifft eine neue konfektionierte Anwendungsform (Applikationsform) für den Einsatz von Desinfektionswirkstoffen zur Wasserdesinfektion sowie ein Verfahren zur Wasserdesinfektion unter Verwendung dieser Anwendungsform.

Die Desinfektion von Wasser ist eine wichtige technische Maßnahme, um die Gesundheit von Menschen und Tieren in menschlicher Obhut zu erhalten und zu verbessern.

Schädliche Mikroorganismen und Keime im Wasser können schwere Erkrankungen und sogar Todesfälle verursachen. Beispielsweise können schon allein durch das Einatmen von Legionellen-kontaminierten feinen Wassertröpfchen oder Aerosolen schwerwiegende Erkrankungen, wie das Pontiac-Fieber oder die Legionärskrankheit, ausgelöst werden. Diese gefährlichen Aerosole können aus kontaminiertem Wasser beispielsweise in Kühlkreisläufen über luftdurchströmte Kühltürme oder auch durch Vernebelungsanlagen zur Luftbefeuchtung in Gewächshäuser oder in Autowaschanlagen freigesetzt werden.

Durch die Desinfektion des Wassers, insbesondere durch die chemische Desinfektion, können für Mensch und Tier gefährliche Mikroorganismen abgetötet und unschädlich gemacht werden.

Zu den bekannten chemischen Desinfektionswirkstoffen gehören beispielsweise Chlor, Natriumhypochlorit, Calciumhypochlorit, Hypochlorige Säure, organisch-chemische Chlorabspalter, Chlordioxid, Brom, Hypobromige Säure, organisch-chemische Bromabspalter, aber auch einige wassermischbare organische Verbindungen. Mit diesen Desinfektionswirkstoffen ist eine erfolgreiche Bekämpfung von schädlichen Mikroorganismen im Wasser möglich.

Als "Desinfektionswirkstoffe" werden dabei hierin sowohl die im Wasser direkt gegen Mikroorganismen wirksamen chemischen Substanzen oder Substanzgemische, als auch Vorläuferprodukte bezeichnet, aus denen durch chemische Reaktionen, insbesondere durch Kontakt mit Wasser oder auch Wasserdampf bzw. ggf. Luft, die eigentlichen im Wasser wirksamen desinfizierenden Substanzen gebildet werden.

Bei ihrem Einsatz zeigen die Desinfektionswirkstoffe jedoch je nach dem verwendeten Desinfektionswirkstoff verschiedene Nachteile:
Alle Desinfektionswirkstoffe weisen ätzende und teilweise auch giftige Eigenschaften auf und sind gemäß der Chemikaliengesetzgebung als Gefahrstoffe eingestuft. Ein direkter Hautkontakt muss in vielen Fällen vermieden werden. Das macht gegebenenfalls ihre Zugabe mit technisch aufwendigen Dosiereinrichtungen erforderlich. Für manuelle Arbeitsschritte bei der Verpackung, Konfektionierung und Entsorgung wie Befüllung, Dosierung, Wartung, Reinigung, Entsorgung der Leergebinde ist es nötig, dass das Personal mit geeigneten persönlichen Schutzausrüstungen versehen ist, um Gefährdungen zu minimieren.

Von manchen Desinfektionswirkstoffen kann bei der Lagerung, insbesondere im Kontakt mit feuchter Luft und/oder bei Lichteinwirkung, eine Brandgefahr ausgehen.

Außerdem bereiten die bei der Verwendung verschiedener Desinfektionswirkstoffe, insbesondere im Falle von Desinfektionswirkstoffen vom Vorläufertyp, entstehenden Rückstände Probleme. Calciumhypochlorit (Ca(OCl)₂) reagiert mit Kohlendioxid, welches oft im Wasser gelöst vorkommt, zu unlöslichem Kalk (Calciumcarbonat). Es bilden sich harte Ablagerungen, welche die Dosiereinrichtungen verunreinigen und verstopfen können. Lösungen von Natriumhypochlorit (NaOCl) können auf Grund ihres alkalischen pH-Wertes bei kalkhaltigem Wasser an der Dosierstelle schwer erreichbare Kalk-Ablagerungen bilden, welche die Dosiereinrichtungen in ihrer Funktion beeinträchtigen.

Organisch-chemische Chlor-/Bromabspalter hinterlassen nach Freisetzung der entsprechenden Halogene zur Desinfektion den verbleibenden organisch-chemischen Rest im Wasser gelöst. So bildet beispielsweise Trichlorisocyanursäure nach Abspaltung des Chlors zur Desinfektion von Wasser im Swimmingpool Cyanursäure. Diese reichert sich im Wasser an und vermindert nachteilig die Wirksamkeit des Chlors.

Der Desinfektionswirkstoff Chlordioxid kann vor Ort in bekannter Weise aus Natriumchlorit (NaClO₂) und einer Säure oder einem sauren Oxidationsmittel bereitet und zur Desinfektion von Wasser eingesetzt werden. Die dabei entstehenden salzartigen Rückstände lösen sich im Wasser, wirken pH-Wert senkend und können gegebenenfalls Korrosionsschäden an wasserberührten metallischen Werkstoffen verursachen.

Aus der US 2014/0170036 A1 ist ein Spender zur Abgabe fester oder flüssiger Wasseraufbereitungsmittel in ein Schwimmbecken oder einen Whirlpool bekannt. Dieser umfasst einen Hohlkörper, der zur Aufnahme von Wasseraufbereitungsmitteln geeignet ist, die in Tablettenform vorliegen können. Der Spender weist ein Gesamtgewicht auf, so dass der Spender schwimmt, wenn er im Wesentlichen leer ist. Wenn er Wasseraufbereitungsmittel enthält, sinkt er ab.

Die WO 2007/029183 A2 offenbart ein Verfahren zur Wasseraufbereitung. Dieses umfasst das Einbringen eines Chemikalienspenders, der eine Wasserbehandlungssubstanz enthält, in ein Gewässer, so dass sich der Spender auf einer ersten Höhe im Wasser befindet. Durch eine Öffnung gelangt Wasser in den Spender, wobei das Wasser mit der Wasseraufbereitungssubstanz in Kontakt kommt und so ein Wirkstoff an das Wasser abgegeben wird. Dadurch wird der Wirkstoff auf der ersten Ebene in das Gewässer verteilt. Die Wirkstoffabgabe in das Gewässer auf der ersten Ebene wird über einen gewissen Zeitraum fortgesetzt. Anschließend lässt man den Spender auf ein zweites höheres Niveau im Gewässer steigen. Für einen weiteren Zeitraum wird auf der zweiten Ebene Wirkstoff aus dem Spender in das Gewässer abgegeben. Es ist Aufgabe der vorliegenden Erfindung, eine neue Anwendungsform für Desinfektionswirkstoffe, insbesondere für solche vom Vorläufertyp, bereit zu stellen, die unter Vermeidung der oben genannten Nachteile eine sichere Bereitstellung und wirksame Anwendung der Desinfektionswirkstoffe, einschließlich einer Rückstandsbeseitigung, bei der Desinfektion von Wasser ermöglicht.

Es ist ferner Aufgabe der vorliegenden Erfindung, ein neues, gefahrlos durchzuführendes Verfahren zur Desinfektion von Wasser, insbesondere von bevorratetem Wasser für die verschiedensten Zwecke, die nachfolgend noch ausführlicher beispielhaft aufgelistet werden, zu schaffen, das auch eine einfache Beseitigung und Entsorgung von Rückständen und Nebenprodukten des eingesetzten Desinfektionswirkstoffs ermöglicht.

Diese Aufgaben werden durch eine neue Anwendungsform und ein unter Verwendung dieser Anwendungsform durchzuführendes Verfahren gemäß den Ansprüchen gelöst.

Als erfindungsgemäße "Anwendungsform" wird hierin, in Anlehnung an die Terminologie im Arzneimittelbereich, eine konfektionierte Packung mit einer portionierten Menge eines Desinfektionswirkstoffs bezeichnet, wobei die konfektionierte Packung nicht nur seine Menge festlegt, sondern aufgrund ihrer Struktur eine bestimmte Art der Anwendung impliziert. Gemäß der vorliegenden Erfindung wird die Packung direkt in ihrer einem Anwender zur Verfügung gestellten Lieferform in eine bevorratete Menge Wasser gegeben, und zwar vorzugsweise im Sinne eines Einhängens. Angesichts der bevorzugten Anwendung kann man sagen, dass die Anwendungsform nach dem Teebeutelprinzip funktioniert, wobei eine Nutzung dieses Prinzips jedoch auf dem Gebiet der Wasserdesinfektion nicht üblich ist und wegen der reaktiven, aggressiven Wirkstoffe bzw. Wirkstoffvorläufer, der Notwendigkeit, Anwendungsrisiken zu antizipieren und zu vermeiden und eine gewünschte Lagerfähigkeit und - sicherheit zu gewährleisten, eine ganz andere Spezifikation und Auswahl und Prüfung der zu verwendenden Materialien erfordert.

Die Grundstruktur einer erfindungsgemäßen Anwendungsform wird nachfolgende unter Bezugnahme auf eine Figur näher erläutert.

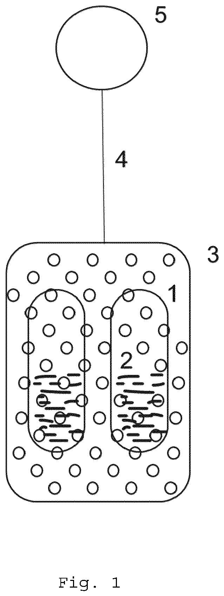

Die Figur (Figur 1) zeigt in schematischer Darstellung eine Ausführungsform einer erfindungsgemäße Desinfektionswirkstoff-Anwendungsform.

Die erfindungsgemäße Anwendungsform weist vorzugsweise vier konstituierende Grundelemente auf, und zwar - von innen nach außen - eine Füllung 2 aus einem Desinfektionswirkstoff, eine Innenverpackung 1 für die direkte Aufnahme des Desinfektionswirkstoffs 2, eine Umverpackung 3, die auch als Umhüllung oder Schutzverpackung bezeichnet werden kann, sowie vorzugsweise eine zusätzliche Handhabungshilfe, in der Regel in Form eines an der Umhüllung befestigten Fadens oder Drahts 4 mit einem Halteelement, aus praktischen Gründen in der Regel in Form eines Rings 5.

Die Füllung 2, die Innenverpackung 1 und die Umverpackung 3 sind bezüglich ihrer Eigenschaften aufeinander abgestimmt, wobei bei dieser Abstimmung insbesondere die Natur des in der Füllung vorhandenen Desinfektionswirkstoffs eine entscheidende Rolle spielt.

Der Desinfektionswirkstoff der Füllung ist ein in der Regel an sich bekannter Desinfektionswirkstoff, der sich beim Kontakt mit flüssigem Wasser so verändert, dass eine antimikrobiell wirksame Substanz erzeugt bzw. mobilisiert wird, die in das flüssige Wasser übergehen kann und eine Desinfektion des Wassers bewirkt. Je nach der Natur des speziellen Desinfektionswirkstoffs kann letzterer in reiner Form, z.B. als Pulver oder Granulat, oder aber aufbereitet (abgemischt) vorliegen, und zwar z.B. verdünnt mit einem Streckmittel oder Stellmittel, z.B. in Form eines löslichen Neutralsalzes, oder als Pressling oder festes oder halbfestes Pellet, das geeignet geformt ist und ggf. auch noch ein geeignetes lösliches oder reaktives Zerfallshilfsmittel enthalten kann.

Eine Verdünnung des Desinfektionswirkstoffs mit einem Streckmittel kann die Dosierung und Anpassung der Füllmenge an bestimmte für die Desinfektion vorgesehene Wassermengen erleichtern oder einem Verbacken der Füllung vorbeugen, kann aber auch aus Sicherheitsgründen vorgesehen sein, z.B. zur Minderung eines Brandrisikos, wie es auf dem Gebiet dithionithaltiger Reinigungsmittel für Wasserbehälter bekannt ist.

Grundsätzlich liegt es jedoch auch im Bereich der vorliegenden Erfindung, als Desinfektionswirkstoff in der Füllung desinfizierend wirkende, wassermischbare flüssige oder feste organische Verbindungen, z.B. 2-Phenoxyethanol, zu verwenden, die als solche oder in Form von Lösungen auf wasserlösliche pulver- oder granulatförmige Trägerstoffe aufgetragen (aufimprägniert) sind und beim Kontakt der Füllung mit flüssigem Wasser in die zu desinfizierende Wasserphase übergehen.

Die genannte, meist pulverförmige Füllung 2 befindet sich in einer Innenverpackung 1. In Abstimmung auf die Füllung 2 muss diese Innenverpackung 1 in der Lage sein, die Füllung 2 sicher bis zum Zeitpunkt ihres Einsatzes in flüssigem Wasser vorzuhalten. Neben einer guten technologischen Befüllbarkeit muss die Innenverpackung aus einem ausreichend inerten Material bestehen, das mit der Füllung bei der Lagerung nicht reagiert, beim Einsatz der erfindungsgemäßen konfektionierten Anwendungsform jedoch einen mehr oder weniger schnellen Zutritt von flüssigem Wasser zu der Füllung ermöglicht, z.B. durch Diffusion durch die Wand der Innenverpackung, durch deren wenigstens teilweise Auflösung oder auch unter Zersetzung unter dem Einfluss einer aus der Füllung freigesetzten chemischen Substanz. Als Materialien für die Innenverpackung werden wasserlösliche oder in Wasser dispergierbare hydrophile Polymere verwendet, z.B. Polylaktate, Polyglykolate, unvernetzer oder teilvernetzter Polyvinylalkohol oder Biopolymere auf Cellulosebasis oder auf Proteinbasis, z.B. Gelatine.

Es hat sich als vorteilhaft erwiesen, wenn die Innenverpackung 1 vor ihrem Kontakt mit flüssigem Wasser wenigstens weitgehend undurchlässig für Luftfeuchtigkeit ist, d.h. gewisse Barriereeigenschaften aufweist. Erprobungen haben gezeigt, dass als Innenverpackung Gelatinekapseln gut geeignet sind, wie sie als Arzneiformen auf dem Gebiet der pharmazeutischen Technologie bekannt sind. Eine Kapsel besteht aus zwei Hälften, wobei die eine Hälfte mit dem pulverförmigen Wirkstoff gefüllt und die andere Hälfe als Verschluss aufgesteckt und eingerastet wird. Dieses Verfahren ist aus der Pharmazie bekannt.

Auf dem Arzneimittelgebiet sind zahlreiche Kapseln, in der Regel auf der Basis von Gelatine, bekannt, deren Eigenschaften durch Zugabe von Vernetzern, Weichmachern, Farbstoffen und anderen Hilfsstoffen oder durch Coating an besondere Anforderungen angepasst sein können und die üblicherweise typenmäßig den Hartgelatinekapseln oder Weichgelatinekapseln zugeordnet werden. Die technologische Herstellung von derartigen Kapseln und ihre Befüllung ist an sich gut bekannt. Zur Verwirklichung der vorliegenden Erfindung kann grundsätzlich auf alle geeigneten technologischen Verfahren zurückgegriffen werden. Gelatinekapseln weisen neben ihrer bekannten Herstellbarkeit und einer Anpassbarkeit ihrer Eigenschaften an bestimmte Füllungen auch den Vorteil auf, dass sie sehr glatte Wände aufweisen, die die chemische und physikalische Stabilität der gefüllten Kapseln bei ihrer Lagerung fördern.

Eine Innenverpackung bzw. Kapsel 1 der genannten Art bzw. mit den genannten Grundeigenschaften befindet sich in einer Umverpackung oder Umhüllung 3. Diese besteht aus einem wasserfesten Material mit einer Struktur, in der Regel in Form eines perforierten Folienmaterials oder eines Netzes, die beim Kontakt mit flüssigem Wasser diesem flüssigen Wasser einen Zutritt zu der Innenverpackung 1 ermöglicht, so dass in gewünschter Weise eine Freisetzung bzw.

Mobilisierung der desinfizierend wirkenden chemischen Substanz aus der Innenverpackung 1 in die Wasserphase erfolgen kann. Um den Zutritt von flüssigem Wasser zu der Innenverpackung zu ermöglichen, kann die Umhüllung z.B. netzförmig sein oder können in der Umverpackung einfache Perforationen in Form von kleinen Öffnungen vorgesehen sein. Es sind jedoch auch komplexere Strukturen möglich, besonders im Falle von hygroskopischen oder sehr reaktiven Füllungen, indem z.B. die perforierten Umhüllungen, die aus einer wasserfesten Barrierefolie bestehen können, einen weiteren wasserlöslichen Überzug, z.B. eine Beschichtung oder eine Lackierung, aufweisen können, der nicht wasserdampfdurchlässig ist, sich beim Einbringen der gesamten Struktur in flüssiges Wasser jedoch auflöst und die Perforationen oder eine andere wasserdurchlässige Struktur freigibt.

Wenn die Füllung nach dem Kontakt mit flüssigem Wasser abreagiert hat und ihren Gehalt an desinfizierend wirkender chemischer Substanz freigesetzt hat, bleiben in der ausgelaugten Kapsel bzw. in den Resten der Kapsel bzw. in der wasserfesten Umhüllung in vielen Fällen mehr oder weniger große Mengen an festen Resten zurück, die nicht in das zu desinfizierende Wasser gelangen sollen. Für die Entfernung solcher Reste zusammen mit der ausgelaugten Verpackung ist an der Umhüllung 3 vorzugsweise eine Handhabungshilfe in Form eines Fadens oder Drahts 4 vorhanden, an dessen Ende sich eine Öse oder ein Haltering 5 befindet, mit dessen Hilfe die ganze Verpackung einerseits sicher in den Wasservorrat eingehängt werden kann und der andererseits nach Abschluss der Desinfektion zur Entnahme der gesamten ausgelaugten Verpackung dient, ohne dass dabei die ausgelaugte Verpackung mit den Händen berührt werden muss.

Zur Desinfektion werden entsprechend der zu desinfizierenden Wassermenge und der Art des Desinfektionswirkstoffs eine oder mehrere Anwendungsformen bzw. Kapseln mit der Umhüllung ins Wasser gegeben. Die Kapsel ist, oder wird im Zuge ihrer Verwendung, ausreichend wasserdurchlässig und durchlässig für die Desinfektionswirkstoffe. Sie soll jedoch selbst vorzugsweise nicht vollständig wasserlöslich sein. Chlor, Brom, und Chlordioxid sind Gase, diffundieren aus der Kapsel und der perforierten Umhüllung und wirken wassergelöst desinfizierend. In Wasser besteht ein chemisches Gleichgewicht aus Chlor (Cl₂), hypochloriger Säure (HOCl) und dem hypochlorigen Säurerest (Hypochlorit-Anion OCl-). Für Brom gilt Analoges. Chlordioxid (ClO₂), das z.B. aus einer Füllung aus Natriumchlorit erzeugt wurde, wirkt als wassergelöstes Gas desinfizierend.

Nach Abschluss der Diffusion dieser Wirkstoffe ins Wasser kann die verbrauchte Kapsel zusammen mit den darin verbliebenden Rückständen mit Hilfe der Umhüllung und des daran befestigten Drahtes in einfacher und sicherer Weise aus dem Wasser entfernt und anschließend entsorgt werden.

Die Desinfektionsmittelrückstände wie Kalkrückstände bei Calciumhypochlorit, salzartige Rückstände bei Chlordioxid oder die organisch-chemischen Reste bei der Abspaltung von Chlor oder Brom aus den entsprechenden Vorläufern diffundieren nicht oder nur in geringem Maße und verbleiben vollständig oder zum größten Teil in der Kapsel. Das desinfizierte Wasser und die Anlagenteile des Wasserbehälters werden durch die Rückstände nicht verunreinigt.

Die Kapsel mit Umhüllung bietet vorteilhafterweise dem Anwender einen Schutz vor den darin enthaltenden Gefahrstoffen. Eine persönliche Schutzausrüstung wie Handschuhe und Schutzbrille ist beim Einsatz einer erfindungsmäßen Anwendungsvorrichtung nicht erforderlich. Bei einem Einsatz von bekannten tablettierten Desinfektionsmitteln werden die oben erläuterten Vorteile der vorliegenden Erfindung nicht erhalten.

Indem die erfindungsgemäßen konfektionierten Anwendungsformen für den Handel in zusätzlichen Verpackungen, z.B. Behältern aus Glas oder Kunststoff, enthalten sind, die eine luftdichte bzw. gegen Wasserdampf geschützte Lagerung ermöglichen, z.B. durch luftdichtes Verpacken zusammen mit einem Trockenmittel wie z.B. Silikagel, wird die Handhabungssicherheit und Lagerungsdauer zusätzlich verbessert.

Als Einsatzbereiche für die erfindungsgemäßen Anwendungsformen können folgende genannt werden:
Trinkwasserversorgungen, Trinkwassertanks jedweder Art, Bauweise und Kundenklientel mit außergewöhnlichen Vorkommnissen und Notfällen;
Generell bevorratetes Wasser in Handel, Kommunen, Gewerbe und Industrie, welches in Kontakt mit Menschen kommt oder kommen kann;
Kommunale, gewerbliche und private Wasserversorgungen;
Seefahrt und Seebauwerke, Binnenschiffe, Handelsschiffe (Kreuzfahrt- und Ausflugsschiffe), Yachten, Boote und Charterbetrieb;
Reisebusse; Reisemobile (Camper/Wohnmobile/Wohnwagen) im Privatbesitz und von Charterunternehmen; Bahn; Flugzeuge;
Mobile Wasch- und Toilettenanlagen;
Militär, THW, Feuerwehr;
Eisbereitung, Eiswürfel und Crushed-Eis für Getränke, Lebensmittel und Storage;
Betriebswasser und Prozesswasser im Lebensmittelsektor;
Tränkenwasser in der Tierhaltung;
Swimmingpools, Wasserbecken in Spas und
Wellnesseinrichtungen, Wasserspiele im Freizeit- und Kultursektor;
Kühltürme, offene Kühlkreisläufe im gewerblichen, kommunalen, privaten, öffentlichen und industriellen Einsatzbereich;
Luftbefeuchter, Vernebler, Geräte, die Wasser in der Luft fein verteilen;
Autowaschanlagen;
Wasserkreisläufe in Prüfständen.

Weitere mögliche praktische Anwendungsbereiche ergeben sich für einen Fachmann ohne Weiteres und ohne erfinderisches Zutun aus den obigen Erläuterungen und Beispielen.

## Patentansprüche

1. Konfektionierte Anwendungsform für den Einsatz von Desinfektionswirkstoffen zur Desinfektion von Wasservorräten, wobei die Anwendungsform mindestens umfasst
i. eine den Desinfektionswirkstoff umfassende oder bildende feste Füllung (2),
ii. die sich in einer Innenverpackung (1) aus einem Material befindet, das beim Kontakt mit flüssigem Wasser einen Zutritt des flüssigen Wassers zu der festen Füllung (2) ermöglicht und für den Desinfektionswirkstoff durchlässig ist, und
iii. eine zusätzliche, die Innenverpackung (1) umgebende wasserfeste Umhüllung (3), die eine für flüssiges Wasser durchlässige Struktur aufweist, **dadurch gekennzeichnet, dass**
iv. die Innenverpackung (1) ein wasserlösliches oder in Wasser dispergierbares hydrophiles Polymer aufweist, und die
v. wasserfeste Umhüllung (3) außerdem mit einer Handhabungshilfe in Form eines Fadens oder Drahts (4) mit einer Endöse (5) verbunden ist.

2. Konfektionierte Anwendungsform nach Anspruch 1, **dadurch gekennzeichnet, dass** die feste Füllung Pulver-, Granulat- oder Pelletform aufweist und die Innenverpackung (1) die Form einer Kapsel oder eines Folienbeutels aufweist.

3. Konfektionierte Anwendungsform nach einem der Ansprüche 1 und 2, **dadurch gekennzeichnet, dass** die Wasserdurchlässigkeit der zusätzlichen Umhüllung (3) durch Perforationen oder offene oder netzartige Abschnitte der Wand der Umhüllung (3) gewährleistet wird.

4. Konfektionierte Anwendungsform nach einem der Ansprüche 1 bis 3, **dadurch gekennzeichnet, dass** das wasserlösliche oder in Wasser dispergierbare hydrophiles Polymer unter Polylaktaten, Polyglykolaten, unvernetzen oder teilvernetzten Polyvinylalkoholen oder Biopolymeren auf Cellulosebasis oder auf Proteinbasis ausgewählt ist.

5. Konfektionierte Anwendungsform nach 4, **dadurch gekennzeichnet, dass** das Biopolymer Gelatine ist.

6. Verfahren zur Desinfektion eines Wasservorrats, **dadurch gekennzeichnet, dass** in den zu desinfizierenden Wasservorrat eine konfektionierte Anwendungsform für einen Desinfektionswirkstoff nach einem der Ansprüche 1 bis 5 eingebracht wird, aus der der Desinfektionswirkstoff der Füllung durch das Wasser ausgelaugt wird und in den zu desinfizierenden Wasservorrat übergeht, und dass nach einer geeigneten Behandlungszeit die ausgelaugte Anwendungsform mit den Resten der ausgelaugten oder abreagierten Füllung aus dem Wasservorrat entfernt wird.

## Claims

1. Prefabricated application for the use of disinfectants in the disinfection of water supplies, the application comprising at least
i. a solid filling (2) comprising or forming the disinfectant,
ii. which is located in an inner packaging (1) made of a material which, on contact with liquid water, renders possible the liquid water to enter the solid filling (2) and is permeable to the disinfectant, and
iii. an additional water-resistant envelope (3) surrounding the inner packaging (1), which envelope has a structure permeable to liquid water, **characterized in that**
iv. the inner packaging (1) includes a water-soluble or water-dispersible hydrophilic polymer, and the
v. water-resistant envelope (3) is also connected to a handling aid in the form of a thread or wire (4) having an end loop (5).

2. Prefabricated application according to claim 1, **characterized in that** the solid filling is available in the form of powder, granules or pellets and the inner packaging (1) is available in the form of a capsule or a film bag.

3. Prefabricated application according to any one of claims 1 and 2, **characterized in that** the water permeability of the additional envelope (3) is ensured by perforations or open or net-like portions in the wall of the envelope (3).

4. Prefabricated application according to any one of claims 1 to 3, **characterized in that** the water-soluble or water-dispersible hydrophilic polymer is selected from polylactates, polyglycolates, non-crosslinked or partially crosslinked polyvinyl alcohols or cellulose-based or protein-based biopolymers.

5. Prefabricated application according to 4, **characterized in that** the biopolymer is gelatin.

6. Method for disinfecting a water supply, **characterized in that** a prefabricated application for a disinfectant according to any one of claims 1 to 5 is introduced into the water supply to be disinfected, from which the disinfectant of the filling is leached out by the water and passes into the water supply to be disinfected, and **in that**, after a suitable treatment time, the leached application is removed from the water supply together with the residues of the leached or reacted filling.

## Revendications

1. Forme d'application confectionnée pour l'utilisation de principes actifs désinfectants destinés à la désinfection de réserves d'eau, la forme d'application comprenant au moins
i. une matière de remplissage solide (2) comprenant ou formant le principe actif désinfectant,
ii. qui se trouve dans un emballage intérieur (1) en un matériau qui, au contact de l'eau liquide, permet à l'eau liquide d'accéder à la matière de remplissage solide (2), et qui est perméable au principe actif désinfectant, et
iii. une enveloppe supplémentaire (3) résistante à l'eau, entourant l'emballage intérieur (1) et présentant une structure perméable à l'eau liquide,
**caractérisée en ce que**
iv. l'emballage intérieur (1) comprend un polymère hydrophile soluble dans l'eau ou dispersable dans l'eau, et
v. l'enveloppe (3) résistante à l'eau est en outre reliée à une aide à la manipulation sous la forme d'un fil ou d'un câble (4) avec un oeillet terminal (5).

2. Forme d'application confectionnée selon la revendication 1,
**caractérisée en ce que** la matière de remplissage solide se présente sous forme de poudre, de granulés ou de pellets, et l'emballage intérieur (1) se présente sous forme de capsule ou de sachet en feuille.

3. Forme d'application confectionnée selon l'une des revendications 1 et 2, **caractérisée en ce que** la perméabilité à l'eau de l'enveloppe supplémentaire (3) est assurée par des perforations ou des sections ouvertes ou réticulées de la paroi de l'enveloppe (3).

4. Forme d'application confectionnée selon l'une des revendications 1 et 3, **caractérisée en ce que** le polymère hydrophile soluble dans l'eau ou dispersable dans l'eau est choisi parmi les polylactates, les polyglycolates, les alcools polyvinyliques non réticulés ou partiellement réticulés, ou les biopolymères à base de cellulose ou à base de protéines.

5. Forme d'application confectionnée selon la revendication 4,
**caractérisée en ce que** le biopolymère est la gélatine.

6. Procédé de désinfection d'une réserve d'eau,
**caractérisé en ce que** l'on introduit dans la réserve d'eau à désinfecter une forme d'application confectionnée pour un principe actif désinfectant selon l'une des revendications 1 à 5, à partir de laquelle le principe actif désinfectant de la matière de remplissage est lessivé par l'eau et passe dans la réserve d'eau à désinfecter, et
**en ce que**, après une durée de traitement appropriée, la forme d'application lessivée est retirée de la réserve d'eau avec les restes de la matière de remplissage lessivée ou ayant réagi.
